(19) **Europäisches Patentamt / European Patent Office / Office européen des brevets**

(11) **EP 4 381 247 B1**

(12) **FASCICULE DE BREVET EUROPEEN**

(45) Date de publication et mention de la délivrance du brevet:
**02.04.2025 Bulletin 2025/14**

(21) Numéro de dépôt: **22740415.9**

(22) Date de dépôt: **07.07.2022**

(51) Classification Internationale des Brevets (IPC):
**G01F 1/002** (2022.01)   **G01F 1/00** (2022.01)
**G01F 1/36** (2006.01)   **G01F 1/42** (2006.01)
**G01F 1/74** (2006.01)   **G01F 15/08** (2006.01)
**G01F 23/18** (2006.01)

(52) Classification Coopérative des Brevets (CPC):
**G01F 1/007; G01F 1/363; G01F 1/42; G01F 1/74; G01F 15/08;** G01F 23/18

(86) Numéro de dépôt international:
**PCT/EP2022/068873**

(87) Numéro de publication internationale:
**WO 2023/011836 (09.02.2023 Gazette 2023/06)**

(54) **DEBITMETRE POUR FLUIDE DIPHASIQUE**

**DURCHFLUSSMESSER FÜR ZWEIPHASIGES FLUID**

**FLOWMETER FOR TWO-PHASE FLUID**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.08.2021 FR 2108428**

(43) Date de publication de la demande:
**12.06.2024 Bulletin 2024/24**

(73) Titulaire: **L'AIR LIQUIDE, SOCIETE ANONYME POUR L'ETUDE ET L'EXPLOITATION DES PROCEDES GEORGES CLAUDE**
**75007 Paris (FR)**

(72) Inventeurs:
• **PATHIER, Didier**
  **78350 Les Loges-En-Josas (FR)**
• **REYMOND, Christian**
  **78350 Les Loges-En-Josas (FR)**
• **DALLAIS, Antony**
  **78350 Les Loges-En-Josas (FR)**
• **ALATERRE, Vincent**
  **78350 Les Loges-En-Josas (FR)**

(74) Mandataire: **Air Liquide**
**L'Air Liquide S.A.**
**Direction de la Propriété Intellectuelle**
**75, Quai d'Orsay**
**75321 Paris Cedex 07 (FR)**

(56) Documents cités:
FR-A1- 2 975 772    FR-A1- 3 000 199
FR-A1- 3 013 446    GB-A- 2 400 676
US-A- 5 679 905

**Description**

La présente invention concerne le domaine des débitmètres pour fluides cryogéniques diphasiques gaz/liquide.

La mesure de débit d'un fluide diphasique composé d'un liquide et d'un gaz est une opération difficile lorsqu'on cherche à mesurer un débit massique. En effet, tous les capteurs mesurant un débit sont gênés lorsqu'ils sont mis en présence d'un liquide diphasique dont la densité change à tout moment. Ceci est en particulier valable pour la mesure de débit des fluides cryogéniques comme l'azote liquide.

Certains débitmètres répertoriés dans la littérature sont basés sur la mesure de la vitesse du fluide. Il s'agit par exemple :

- des débitmètres à turbine : une turbine est installée dans le fluide en mouvement et la vitesse de rotation de la turbine donne une image de la vitesse du fluide.
- des débitmètres à tube de Pitot : deux tubes sont installés dans le fluide en mouvement à mesurer. Un tube est installé perpendiculairement au débit et donne la pression statique, l'autre est installé parallèlement au débit et donne la pression dynamique totale. La différence de pression dynamique entre ces deux mesures permet de calculer le débit.
- des débitmètres à ultrasons : certains utilisent l'effet Doppler (analyse de la fréquence réfléchie par les particules du fluide qui donne une image de la vitesse de la particule et donc du fluide) alors que d'autres mesurent une différence de temps de parcours d'une onde ultrasonore de l'amont vers l'aval et de l'aval vers l'amont (image de la vitesse du fluide).

Dans tous ces cas, lorsque la densité du fluide varie continuellement, le passage du débit volumique au débit massique est délicat à réaliser précisément.

D'autres systèmes utilisent la mesure de perte de charge (perte de pression) pour en déduire le débit. Il s'agit par exemple des débitmètres à orifice calibré qui mesurent la perte de charge en amont et en aval d'un orifice calibré placé dans le fluide en mouvement. La mesure de ces appareils est très perturbée lorsque le fluide n'a pas une densité constante et lorsque le taux de gaz augmente dans le liquide.

Les débitmètres électromagnétiques, applicables seulement aux fluides ayant une conductivité électrique suffisante utilisent le principe de l'induction électromagnétique : Un champ électromagnétique est appliqué au fluide et la force électromotrice créée (force proportionnelle au débit du fluide) est mesurée. Dans le cas de la mesure de débit de fluides cryogéniques (non conducteur) tel que l'azote liquide, ce principe n'est pas applicable.

Les débitmètres à effet vortex sont basés sur le phénomène de génération de tourbillons que l'on constate derrière un corps fixe non profilé placé dans un fluide en mouvement (effet Karman). La mesure des variations de pression créées par ces tourbillons donne la fréquence des tourbillons, celle-ci étant proportionnelle à la vitesse du fluide lorsque le fluide garde des propriétés constantes. Lorsque la densité du fluide varie, la mesure est faussée.

Les débitmètres thermiques sont eux basés sur la mesure de l'augmentation de température créée par un apport constant d'énergie. Un système à deux sondes de température mesure la différence de température entre le débit entrant et sortant du débitmètre. Entre ces deux sondes, une résistance apporte une quantité connue d'énergie. Lorsque l'on connait la capacité calorifique du fluide en mouvement, le débit peut être calculé à partir de ces mesures. Cependant, ce principe n'est pas applicable aux liquides diphasiques dont le comportement thermique (vaporisation du liquide) est totalement différent des liquides monophasiques.

Seul le débitmètre massique à effet Coriolis donne une mesure précise du débit massique d'un fluide. Le débitmètre est constitué d'un tube en U ou oméga ou courbe, dans lequel circule le fluide. Le U est soumis à une oscillation latérale et la mesure du déphasage des vibrations entre les deux branches du U donne une image du débit massique. Cependant, son coût est assez élevé et lorsqu'il est utilisé à des températures très basse (azote liquide à -196°C par exemple) et avec un fluide dont la densité varie énormément et comportant une partie importante en phase gazeuse, il y a nécessité d'isoler fortement le système (isolation performante telle qu'une isolation sous vide par exemple) et malgré tout, les mesures sont faussées lorsque le taux de gaz dépasse quelques pourcent en masse. On notera aussi que la mesure est souvent rendue impossible lorsque la vitesse du fluide est faible ou nulle (dans la première moitié de la plage de mesure).

Comme on peut le constater, la mesure du débit d'un liquide diphasique et en particulier la mesure du débit d'un fluide cryogénique avec une précision acceptable n'est pas facile à réaliser avec les appareils actuellement disponibles sur le marché.

On peut néanmoins noter que des systèmes sont actuellement commercialisés.

On peut citer par exemple le cas des systèmes basés sur le principe de la mesure du niveau d'un liquide s'écoulant dans un canal juste avant une restriction de la section de passage. Ce système, décrit dans le document US- 5 679 905, fonctionne en substance comme suit : le fluide diphasique est d'abord séparé en une phase gazeuse qui n'est pas mesurée et une phase liquide dont le débit est mesuré. Ce liquide passe dans un canal qui présente une réduction de section en sa sortie. Plus le débit est important, plus le niveau de liquide dans le canal est important et une mesure de niveau dans ce canal permet alors de déduire le débit instantané. Comme on le constate, ce système ne prend pas en compte le débit gazeux qui dans certaines applications est négligeable. Par contre, ce système permet de mesurer avec une précision relativement bonne le débit de liquide sans être perturbé par le taux de gaz, ce qui est le but recherché.

On remarquera au passage que pour que ce système fonctionne correctement, il doit être bien isolé des entrées de chaleur qui pourraient vaporiser une partie du liquide isolé et ainsi perturber la mesure de niveau. C'est pour cela que l'isolation sous vide est utilisée dans ce système.

On remarquera aussi que pour que le système fonctionne, il doit y avoir la présence de deux phases dans le débitmètre ce qui interdit son fonctionnement avec un liquide sous refroidi (liquide franc sans phase gazeuse).

On peut noter également que ce document met en œuvre une fente en V qui a l'inconvénient d'être difficile à produire avec une grande précision. Une variation de 5% sur la largeur de la fente a des conséquences très lourdes car elle rend la mesure imprécise dans les mêmes proportions.

On peut également citer le cas des débitmètres à séparateur de phase.

En effet, dans le cas où la mesure des débits de liquide et de gaz est nécessaire, on utilise parfois un système qui reprend le même principe de séparation des phases avant la mesure de débit.

Ainsi, des appareils commercialement disponibles présentent le dispositif qui suit :

- Le liquide diphasique passe d'abord dans un séparateur de phase qui sépare la phase liquide de la phase gazeuse ;
- La phase gazeuse est dirigée vers un débitmètre volumique (de type turbine par exemple) avec une compensation en température ;
- La phase liquide est aussi dirigée vers un débitmètre volumique (de type turbine par exemple) ;
- Ces deux mesures de débit sont ensuite converties en mesure de masse et ajoutées.

A priori, ce dispositif est plus couteux que le précédent, on peut penser qu'il sera très précis. Dans la pratique, on constate que la mesure du débit liquide est entachée d'erreurs qui fluctuent suivant les conditions de pression et de température du liquide entrant dans le débitmètre. Ces erreurs de mesure sont dues à la présence de gaz dans la phase liquide qui traverse le débitmètre. En effet, lorsque le liquide quitte le séparateur de phase pour aller vers le débitmètre, une partie de liquide se vaporise, soit à cause des entrées de chaleur soit à cause de la chute de pression due à une remontée du liquide, soit à cause d'une chute de pression due à la perte de charge créée par le débitmètre lui-même.

Enfin, pour mesurer le débit d'un liquide cryogénique, on peut aussi s'affranchir des problèmes cités ci-dessus en créant des conditions de pression et de température différentes de la pression d'équilibre (limite d'ébullition). Dans ce domaine, la méthode la plus couramment utilisée est exemple un débitmètre en sortie d'une pompe cryogénique (coté haute pression). Dans ce cas, le liquide est par exemple pompé dans une cuve où il est à l'équilibre et il est monté en pression par la pompe, ceci presque sans augmentation de température. Les tuyauteries et le débitmètre qui suivent peuvent alors créer une perte de charge, cela n'aura pas pour conséquence de vaporiser le liquide pourvu que la perte de charge soit nettement inférieure à l'augmentation de pression créée par la pompe.

Dans ce cas, on peut utiliser un débitmètre classique type vortex, turbine ou autre dans la mesure où il supporte les basses températures.

Cette technique est par exemple parfaitement adaptée à la mesure de débit des camions de livraison d'azote. Elle est fiable est d'un cout acceptable dans la mesure où la pompe cryogénique est requise pour d'autres raisons.

En revanche, lorsque qu'il faut mesurer le débit d'azote liquide à un point où il n'y a pas de pompe cryogénique, alors cette technique n'est plus intéressante.

On connait aussi une solution de mesure simultanée ou alternée des phases liquide et gazeuses, telle que décrite dans le document FR-3 013 446 au nom de la Demanderesse, basée sur le principe suivant:

- le fluide arrive dans une cuve jouant le rôle de séparateur de phase ;
- la phase gazeuse est évacuée par le haut de la cuve en passant par un débitmètre fonctionnant sur une phase gazeuse pure ;
- la phase liquide est évacuée par le bas de la cuve en passant par un débitmètre fonctionnant sur une phase liquide pure ;
- les deux phases sont ensuite réunie au niveau d'une vanne trois voies et continuent leur chemin ;
- muni des deux débits mesurés ainsi que la pression et la température du fluide, le système peut calculer le débit massique du fluide passant par le débitmètre.

Ce système s'avère précis et fonctionne quel que soit le taux de diphasique présent dans le fluide. Il fonctionne de manière précise lorsque le fluide est totalement gazeux ou lorsqu'il est totalement liquide ou sous refroidi, mais il fonctionne aussi dans toutes les situations intermédiaires.

Cependant, ce système est pénalisé par le fait qu'il est relativement coûteux et que son installation est relativement complexe.

Il doit être installé horizontalement et son encombrement est assez important (typiquement 1 mètre de large, 1 mètre de long, 2 mètre de haut).

La présente invention s'attache alors à proposer une nouvelle solution simple et fiable de mesure du débit de fluides diphasiques gaz/liquide cryogéniques, permettant de solutionner tout ou partie des problèmes techniques évoqués ci-dessus.

Comme on le verra plus en détails dans ce qui suit, la solution proposée ici repose sur la mise en œuvre des mesures suivantes :

1. Mesure du débit de la phase liquide non sous-refroidie à l'aide d'un système de déversoir : une mesure du débit de la phase liquide non sous-refroidie avec un système dit « à déversoir ». Pour cela, le fluide diphasique est d'abord séparé naturellement en une phase gazeuse qui n'est pas mesurée et une phase liquide dont le débit est mesuré.

Le principe du déversoir est le suivant : Un obstacle (cloison perforée d'une ou plusieurs fentes) est installé dans le passage du liquide, il freine le débit du liquide. Plus le débit est important, plus le niveau en amont de l'obstacle va monter. Avec un obstacle calibré il est alors possible de calculer le débit en fonction du niveau de liquide mesuré en amont de l'obstacle.

Pour mesurer la hauteur de liquide en amont de l'obstacle, on utilise une mesure de pression différentielle. Parmi les capteurs de pression différentielle disponibles sur le marché, on peut notamment utiliser des capteurs qui permettent de mesurer de faibles valeurs de pression.

Cependant, pour atteindre ce niveau de pression avec une hauteur du fluide cryogénique, on doit obtenir une hauteur de l'ordre de 300 mm. Pour cette raison, il est avantageux d'orienter le déversoir dans le sens vertical afin qu'il permette la création d'une hauteur de liquide élevée, et que la mesure de pression différentielle soit dès lors assez élevée également.

2. Mesure du débit de la phase liquide sous refroidie avec un orifice calibré : lorsque le fluide cryogénique est sous refroidi, alors la mesure de débit est réalisée à l'aide d'un orifice calibré situé en amont ou en aval du déversoir.

Le liquide passe au travers de l'orifice calibré et génère une différence de pression. Par calcul, il est alors possible d'obtenir le débit du fluide cryogénique sous refroidi.

On notera ici que ce système de mesure de débit ne fonctionne pas lorsque le fluide n'est pas sous refroidi. Lorsqu'il est saturé (ou à l'équilibre), la présence de gaz dans le liquide fausse la mesure, la variation de pression mesurée génère davantage de diphasique. La différence de pression mesurée n'est pas représentative de la quantité de fluide cryogénique passant dans l'orifice calibré. Il est donc nécessaire de connaître à tout moment l'état du fluide cryogénique, sous refroidi ou non.

3. Mesure de l'état de sous-refroidissement du fluide cryogénique (détermination de l'état du fluide cryogénique : sous refroidi ou équilibre gaz-liquide) : pour connaitre l'état du fluide cryogénique évalué, on mesure l'état de sous refroidissement du fluide cryogénique dont on veut mesurer le débit.

A cette fin, on mesure le niveau de liquide présent en aval du déversoir. Lorsque ce niveau est nul, le fluide cryogénique n'est pas sous refroidi, tandis que dans le cas contraire, le fluide cryogénique est sous refroidi :

- Cas No 1: Si le capteur mesurant la hauteur de liquide dans l'appareil (delta P2, en aval du déversoir) indique une valeur quasi nulle, le fluide présente donc une phase gaz et une phase liquide. Le capteur mesurant la différence de pression sur l'orifice calibré (Delta P3) indiquera également une valeur non nulle (gaz + liquide).
- Cas No 2 : Si le capteur mesurant la hauteur de liquide dans l'appareil ($\Delta$P2, en aval du déversoir) indique une valeur non nulle, le fluide présente donc uniquement une phase liquide. Le capteur mesurant la différence de pression sur l'orifice calibré ($\Delta$P3) indiquera une valeur représentative du débit en liquide pur.

Pour détecter de façon fiable si le fluide se place dans le cas No 1 ou dans le cas No 2, on réalise une mesure de différence de pression dans un second volume en aval du déversoir ($\Delta$P2) comme vu précédemment. Ce volume est soit rempli de gaz (cas No 1) soit rempli de liquide (cas No 2), du fait de la différence de densité entre phases liquide et gaz, et permet ainsi de définir si le fluide est du liquide pur ou bien un fluide diphasique.

Et lorsque $\Delta$P3 est négatif, cela signifie que le débit de fluide est inversé (de l'aval vers l'amont) : Dans ce cas, ce débit est neutralisé et non pris en compte par le débitmètre. L'erreur est ainsi minimisée.

4. Selon un mode de mise en œuvre avantageux de l'invention, on met en œuvre ce que l'on peut appeler un « déversoir à plusieurs fentes ».

Comme on l'a évoqué plus haut dans la description de l'art antérieur (US-5 679 905), un des points critiques de tels déversoirs antérieurs réside dans la précision de fabrication de leur fente en V. Pour que la mesure soit précise, il faut que la géométrie de cette fente en V soit parfaitement maitrisée. Dans le cas d'une fente à largeur fixe (pas en V), il est important que cette fente garde une largeur constante sur toute sa longueur. Dans la pratique, avec les contraintes liées aux techniques de construction, il est très difficile de garantir que cette fente ait une largeur constante.

Dans ce contexte on propose selon la présente invention de réaliser cette fente en plusieurs portions, donc en quelque sorte de mettre en œuvre un déversoir à plusieurs fentes, chaque segment ayant une longueur courte permettant de conserver plus surement une largeur constante.

L'association de toutes ces sections de fente forme l'équivalent d'une fente à largeur constante sur toute la hauteur. Le point haut d'une fente correspond exactement au point bas de la suivante. Il n'y a pas de recouvrement.

5. Calcul d'une estimation du taux de diphasique : grâce au système décrit ci-dessus, on peut comme on l'a compris mesurer la phase liquide quelles que soient les conditions, mais on peut aller plus loin et réaliser des calculs basés sur les deux mesures (via déversoir et orifice calibré) et estimer alors le taux de diphasique. Ce taux permet de déterminer la phase gazeuse et ainsi d'affiner la mesure de débit de fluide total.

Les avantages du débitmètre proposé selon la présente invention peuvent être résumés ainsi :

- un coût modéré ;
- une mesure offrant une précision très correcte (typiquement 2%) ;
- un système ne pouvant pas donner lieu à une mesure erronée lorsque le débit est nul ou légèrement négatif et que le fluide cryogénique est en ébullition dans le débitmètre ;
- une facilité d'installation ;
- il fournit des mesures fiables lorsque le taux de gaz dans le fluide varie de 0 à 100%, le système permettant même de mesurer le débit lorsque le liquide est sous refroidi.

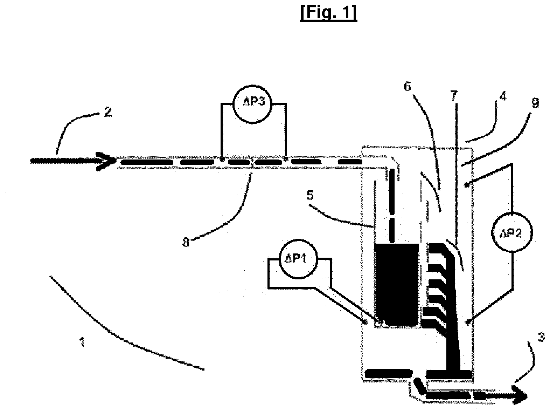

En résumé le débitmètre proposé ici fonctionne selon le principe de fonctionnement suivant, que l'on explicite en liaison avec la [Figure 1] annexée :

- utilisation d'une mesure de débit en utilisant un déversoir pour la phase liquide lorsque le fluide est diphasique, le niveau étant mesuré grâce à la pression différentielle $\Delta P1$, où $\Delta P1$ est la mesure de différence de pression entre le fond du réservoir 5 et l'atmosphère interne de l'appareil. Cela nous permet d'en déduire la hauteur de liquide dans le réservoir et par la suite le débit 7 passant par les fentes 6.
- utilisation d'une mesure de débit par un orifice calibré (8) et une mesure de pression différentielle $\Delta P3$ pour la phase gaz lorsque le fluide est 100% gazeux, pour la phase liquide lorsque le fluide est 100% liquide (sous refroidi) et pour corriger le débit liquide mesuré par le déversoir lorsque le fluide est diphasique. En d'autres termes, $\Delta P3$ est mesuré de chaque côté d'un orifice calibré, ce qui permet de faire une mesure de qualité du débit lorsque le cryogène est 100% gazeux ou 100% liquide (sous refroidi).
- on le voit donc sur la figure, le système est composé d'un réservoir 5 qui est muni d'une fente segmentée (plusieurs segments de fentes 6). Ces fentes représentent le déversoir.
- on considère une mesure de pression différentielle $\Delta P2$, pour en déduire s'il y a présence de liquide en aval du déversoir afin de déterminer l'état du fluide (gazeux, diphasique ou sous-refroidi). Cette mesure indique s'il y a envahissement liquide en aval du déversoir ou pas, cet envahissement pouvant être dû à l'état sous refroidi du fluide cryogénique ou à l'existence d'un débit en sens inverse.

En effet, en fonctionnement normal, ce $\Delta P2$ réalise une mesure qui est proche de zéro, en d'autres termes il n'y a quasiment pas de différence de pression entre ces deux points en phase gazeuse.

En revanche, lorsque le cryogène liquide (par exemple l'azote liquide) arrive sous-refroidi, tout le système va se remplir de liquide, on aura alors du liquide dans l'ensemble de l'appareil (9).

Dans ce dernier cas, selon l'invention, l'algorithme de calcul du débit va basculer sur la mesure utilisant l'orifice calibré ($\Delta P3$) qui va fonctionner tout à fait correctement dans le cas d'un liquide sous refroidi.

Dans ce cas, nous allons détecter cette situation par l'apparition d'une valeur de $\Delta P2$ significative, et ainsi lorsque $\Delta P2$ s'éloigne de zéro, nous basculons sur le mode de mesure de débit utilisant l'orifice calibré ($\Delta P3$) et vice versa.

Comme on le développera plus loin, en résumé, dans le cas d'un liquide diphasique, on utilise des formules permettant de calculer le taux de gaz avec comme données d'entrée $\Delta P1$ et $\Delta P3$. Par la suite, on utilise ce taux de gaz pour corriger la mesure de débit obtenue par le déversoir.

On pourra avantageusement procéder également à une mesure de température du fluide afin d'en déduire sa densité. Grâce à cette densité, on pourra alors affiner les calculs de débit liés aux mesures de $\Delta P$: $\Delta P1$ du déversoir et $\Delta P3$ de l'orifice calibré.

Récapitulons la nomenclature des éléments présents sur la [Figure 1] illustrant un des modes de réalisation de l'invention :

- 1 : le débitmètre pour fluides cryogéniques
- 2 : le fluide entrant dans le dispositif, dont on doit mesurer le débit

- 3 : le fluide sortant du dispositif et se dirigeant vers l'aval
- 4 : appareil, ensemble chaudronné
- 5 : le réservoir en amont du déversoir
- 6 : les fentes dans une paroi verticale du réservoir 5 (déversoir)
- 7 : le flux de liquide s'échappant des fentes 6
- 8 : un orifice calibré (fournissant la différence de pression ΔP3)
- 9 : volume interne à l'appareil

Le mode de réalisation présenté en [Figure 1] annexée a été utilisé pour mettre en œuvre les essais explicités ci-dessous, qui ont donné des résultats très positifs. Mise en œuvre avec de l'azote liquide, essais menés dans différentes conditions de pression (de 1 à 3 barg) et différents taux de diphasique (de 0 à 100% de gaz).

Un essai a été effectué avec de l'azote liquide sous refroidi.

Bien entendu, le débitmètre est adaptable sans difficulté à d'autres fluides cryogéniques, il suffit de modifier la section des fentes et le diamètre de l'orifice calibré. Globalement, ces tests montrent une précision de l'ordre de +/-2% de la pleine échelle de mesure qui s'élève à 3000 kg/h.

Les résultats expérimentaux sont rassemblés dans les [Tableaux] 1 et 2 ci-dessous.

Le [Tableau 1] présente la logique de calcul utilisée ici.

Le [Tableau 2] présente les différentes situations que l'on peut rencontrer dans la mesure du débit, et en appliquant la logique énoncée dans le tableau 1, on obtient une mesure cohérente du débit.

Toutes les pressions présentes dans le Tableau sont des ΔP.

Les formules des fonctions fi utilisées sont les suivantes :

- formule pour f1 :

débit fluide gazeux (kg.s-1) = C (Coefficient de décharge) x E (coefficient de vitesse d'approche) x Epsilon (coefficient de détente) x Pi x (diamètre orifice calibré au carré) / 4 x (racine de 2) x (racine de la densité du gaz gazeux) x (racine de ΔP3)

- formule pour f2 phase liquide:

débit de la phase liquide du gaz diphasique = densité du gaz liquide x coefficient k x largeur de la fente verticale droite x (racine de 2) x (racine de g (racine de 9.81 gravité de la terre)) x hauteur de liquide dans le déversoir à la puissance 1.5 avec hauteur de liquide dans le déversoir = ΔP1 / densité du gaz liquide / g (9.81 gravité de la terre) k étant un coefficient fixe propre à chaque appareil.

- formule pour f2 total (phases gazeuse et liquide du gaz diphasique) = résolution mathématique des équations suivantes

- 

$$\text{débit massique liquide} = \text{f2 phase liquide calculé ci-dessus}$$

- 

$$\text{débit total} = \text{f2 débit massique liquide} + \text{f2 débit massique gaz}$$

- 

densité moyenne totale = (masse phase liquide + masse phase gaz) / (volume phase liquide + volume phase gaz)

-

f2 total: débit massique total (kg.s-1) = C (Coefficient de décharge) x E (coefficient de vitesse d'approche) x Epsilon (coefficient de détente) x Pi x (diamètre orifice calibré à la puissance 2) / 4      f2 total: x (racine de 2) x (racine de la densité moyenne totale) x (racine de ΔP3)

- avec densité moyenne = densité phase liquide x ( 1 - f4) + densité phase gaz x f4

-

formule pour f3: débit gaz liquide pur (kg.s-1) = C (Coefficient de décharge) x E (coefficient de vitesse d'approche) x Epsilon (coefficient de détente) x Pi x (diamètre orifice calibré à la puis-      formula pour f3: sance 2) / 4 x (racine de 2) x (racine de la densité du gaz liquide) x (racine de ΔP3)

- formule pour f4 : Pour calculer f4, on effectue une résolution mathématique des équations présentées pour le calcul de f2.

[Table 1]

| Condition 1 | Condition 2 | Condition 3 | mesure de débit | Taux diphasique |
|---|---|---|---|---|
| Si ΔP3>=0 | Si ΔP2>0 | | f3(ΔP3) (débit d'un orifice calibré avec liquide pur) | 0 |
| | Si ΔP2=<0 | Si ΔP1>0 | f2(ΔP1, f4) (débit d'un déversoir avec liquide pur + correction pour la phase gaz) | f4(ΔP1, ΔP3) (taux de diphasique calculé avec ΔP1 et ΔP3) |
| | | Si ΔP1=<0 | f1(ΔP3) (débit d'un orifice calibré avec du gaz pur) | 100 |
| Si ΔP3<0 | | | 0 | 0 |

[Table 2]

| Sens d'écoulement | Etat du fluide cryo | % gaz | Delta P1 | Delta P2 | Delta P3 | mesure du débit | Estimation du taux de diphasique |
|---|---|---|---|---|---|---|---|
| Normal | Gazeux | 100 | 0 | 0 | >0 | f1(ΔP3) | 100% |
| Normal | diphasique | 0 à 100 | >0 | 0 | >0 | f2(L1P1, f4) | f4(ΔP1, ΔP3) |
| Normal | sous refroidi | 0 | 0 | >0 | >0 | f3(ΔP3) | 0% |
| Inverse | Gazeux | 100 | 0 | 0 | <0 | 0 erreur de mesure | 0% erreur de mesure |
| Inverse | diphasique | 0 à 100 | 0 | >0 | <0 | 0 erreur de mesure | 0% erreur de mesure |
| inverse | sous refroidi | 0 | 0 | >0 | <0 | 0 erreur de mesure | 0% |

Les exemples développés ci-dessous sont basés sur des mesures réalisées sur un équipement conforme à celui décrit dans le cadre de la figure 1, avec un débitmètre équipé d'un déversoir avec une fente de 2 mm de large et un orifice calibré 8 de 20 mm de diamètre. Le fluide utilisé était l'azote liquide à une pression de 2 barg.

Situation n°1: pas de circulation de gaz:

ΔP1 = 0
ΔP2 = 0
ΔP3 = 0

| Condition 1 | Condition 2 | Condition 3 | mesure de débit | Taux diphasique |
|---|---|---|---|---|
| **Si ∆P3>=0** | Si ∆P2>0 | | f3(∆P3) (débit d'un orifice calibré avec liquide pur) | 0 |
| | **Si ∆P2=<0** | Si ∆P1>0 | f2(∆P1, f4) (débit d'un déversoir avec liquide pur + correction pour la phase gaz) | f4(∆P1, ∆P3) (taux de diphasique calculé avec ∆P1 et ∆P3) |
| | | **Si AP1=<0** | f1(∆P3) (débit d'un orifice calibré avec du gaz pur) **0 kg/h** | **100 % gaz** |
| Si ∆P3<0 | | | 0 | 0 |

Situation n°2: gaz pur durant la mise en froid de l'appareil:

∆P1 = 0
∆P2 = 0
∆P3 = 52 mbar

| Condition 1 | Condition 2 | Condition 3 | mesure de débit | Taux diphasique |
|---|---|---|---|---|
| **Si ∆P3>=0** | Si ∆P2>0 | | f3(∆P3) (débit d'un orifice calibré avec liquide pur) | 0 |
| | **Si ∆P2=<0** | Si ∆P1>0 | f2(∆P1, f4) (débit d'un déversoir avec liquide pur + correction pour la phase gaz) | f4(∆P1, ∆P3) (taux de diphasique calculé avec ∆P1 et ∆P3) |
| | | **Si ∆P1=<0** | f1(∆P3) (débit d'un orifice calibré avec du gaz pur) **301 kg/h** | **100% gaz** |
| Si ∆P3<0 | | | 0 | 0 |

Situation n°3: gaz diphasique durant le fonctionnement standard:

∆P1 = 16
∆P2 = 0
∆P3 = 18 mbar

| Condition 1 | Condition 2 | Condition 3 | mesure de débit | Taux diphasique |
|---|---|---|---|---|
| **Si ∆P3>=0** | Si ∆P2>0 | | f3(∆P3) (débit d'un orifice calibré avec liquide pur) | 0 |
| | **Si ∆P2=<0** | **Si ∆P1>0** | 2(∆P1, f4) (débit d'un déversoir avec liquide pur + correction pour la phase gaz) **863 kg/h** | f4(∆P1, ∆P3) (taux de diphasique calculé avec ∆P1 et ∆P3) **2% gaz** |
| | | Si ∆P1=<0 | f1(∆P3) (débit d'un orifice calibré avec du gaz pur) | 100 |
| Si ∆P3<0 | | | 0 | 0 |

Situation n°4: gaz liquide sous refroidi:

∆P1 = 16
∆P2 = 5

ΔP3 = 15 mbar

| Condition 1 | Condition 2 | Condition 3 | mesure de débit | Taux diphasique |
|---|---|---|---|---|
| **Si ΔP3>=0** | **Si ΔP2>0** | | f3(ΔP3) (débit d'un orifice calibré avec liquide pur) **1205 kg/h** | **0 % gaz** |
| | Si ΔP2=<0 | Si ΔP1>0 | f2(ΔP1, f4) (débit d'un déversoir avec liquide pur + correction pour la phase gaz) | f4(ΔP1, ΔP3) (taux de diphasique calculé avec ΔP1 et ΔP3) |
| | | Si ΔP1=<0 | f1(ΔP3) (débit d'un orifice calibré avec du gaz pur) | 100 |
| Si ΔP3<0 | | | 0 | 0 |

Situation n°5: circulation de gaz dans le sens inverse:

ΔP1 = 1
ΔP2 = 8
ΔP3 = -11 (négatif)

| Condition 1 | Condition 2 | Condition 3 | mesure de débit | Taux diphasique |
|---|---|---|---|---|
| Si ΔP3>=0 | Si ΔP2>0 | | f3(ΔP3) (débit d'un orifice calibré avec liquide pur) | 0 |
| | Si ΔP2=<0 | Si ΔP1>0 | f2(ΔP1, f4) (débit d'un déversoir avec liquide pur + correction pour la phase gaz) | f4(ΔP1, ΔP3) (taux de diphasique calculé avec ΔP1 et ΔP3) |
| | | Si ΔP1=<0 | f1 (ΔP3) (débit d'un orifice calibré avec du gaz pur) | 100 |
| **Si ΔP3<0** | | | **0 kg/h** | **0 % gaz** |

La présente invention concerne alors (les références numériques peuvent être trouvées dans la Figure annexée) un débitmètre pour fluides diphasiques cryogéniques liquide/gaz, comprenant :

- Une canalisation d'entrée du fluide dont on doit mesurer le débit, dans le débitmètre, canalisation munie d'un orifice calibré ;

- Un réservoir vertical (5), réservoir environné par un appareil (4), réservoir dans lequel débouche ladite canalisation, la paroi du réservoir étant muni de plusieurs fentes de déversement du fluide (6 - système de « déversoir »), du réservoir (5) vers l'espace intérieur (9) à l'appareil entourant le réservoir (5);

- Des capteurs de pression permettant de mesurer les différences de pression suivantes :

  • Une différence de pression (ΔP3) entre l'amont et l'aval de l'orifice calibré

  • Une différence de pression (ΔP1) entre le fond du réservoir (5) et l'atmosphère environnant le réservoir (9) au sein de l'espace intérieur (9) au sein de l'appareil ;

  • Une différence de pression (ΔP2) existant entre deux points localisés dans l'espace environnant le réservoir (5) au sein de l'espace intérieur (9), permettant de déduire la hauteur de liquide en aval du réservoir, afin de déterminer l'état du fluide (gazeux, diphasique ou sous-refroidi), et donnant le niveau d'envahissement liquide en aval du réservoir.

- un système d'acquisition et de traitement de données, apte à réaliser les évaluations suivantes :

a. une détermination de l'information de l'état du fluide entrant : gazeux, diphasique ou sous-refroidi, à partir de la donnée de différence de pression ΔP2 ;
b. en fonction de cette information d'état, la détermination dudit débit en utilisant soit le différentiel de pression ΔP3 lorsque le fluide est 100% gazeux ou 100% liquide (sous refroidi), soit le différentiel de pression ΔP1 qui permet de déduire la hauteur de liquide dans le réservoir et par la suite le débit de fluide passant par les fentes.

**Revendications**

1.  Un débitmètre (1) pour fluides diphasiques cryogéniques liquide/gaz, comprenant :

    - Une canalisation d'entrée (2) du fluide dont on doit mesurer le débit, dans le débitmètre, canalisation munie d'un orifice calibré (8) ;
    - Un réservoir vertical (5), réservoir environné par un appareil (4), réservoir dans lequel débouche ladite canalisation, la paroi du réservoir étant muni de plusieurs fentes de déversement du fluide (6) formant un système de « déversoir », du réservoir (5) vers l'espace intérieur (9) à l'appareil entourant le réservoir (5);
    - Des capteurs de pression permettant de mesurer les différences de pression suivantes :

      • Une différence de pression (ΔP3) entre l'amont et l'aval de l'orifice calibré
      • Une différence de pression (ΔP1) entre le fond du réservoir (5) et l'atmosphère environnant le réservoir (9) au sein de l'espace intérieur (9) au sein de l'appareil ;
      • Une différence de pression (ΔP2) existant entre deux points localisés dans l'espace environnant le réservoir (5) au sein dudit espace intérieur (9), permettant de déduire la hauteur de liquide en aval du réservoir, afin de déterminer l'état du fluide, gazeux, diphasique ou sous-refroidi, et donnant le niveau d'envahissement liquide en aval du réservoir.

    - un système d'acquisition et de traitement de données, apte à réaliser les évaluations suivantes :

      a. une détermination de l'information de l'état du fluide entrant : gazeux, diphasique ou sous-refroidi, à partir de la donnée de différence de pression ΔP2 ;
      b. en fonction de cette information d'état, la détermination dudit débit en utilisant soit le différentiel de pression ΔP3 lorsque le fluide est 100% gazeux ou 100% liquide (sous refroidi), soit le différentiel de pression ΔP1 qui permet de déduire la hauteur de liquide dans le réservoir et par la suite le débit de fluide passant par les fentes.

**Patentansprüche**

1.  Durchflussmesser (1) für kryogene Zweiphasenfluide (flüssig/gasförmig), der Folgendes aufweist:

    - eine Einlassleitung (2) für das Fluid, dessen Durchfluss gemessen werden soll, in den Durchflussmesser, wobei die Leitung mit einer kalibrierten Öffnung (8) versehen ist;
    - einen vertikalen Tank (5), in den die Leitung mündet und der von einem Gerät (4) umgeben ist, wobei die Wand des Tanks mit mehreren Schlitzen (6) zur Abgabe von Fluid versehen ist, die ein "Überlaufsystem" vom Tank (5) zum Innenraum (9) des Geräts bilden, das den Tank (5) umgibt;
    - Drucksensoren, mit denen die folgenden Druckunterschiede gemessen werden können:

      • eine Druckdifferenz (ΔP3) zwischen der stromaufwärtigen und der stromabwärtigen Seite der kalibrierten Öffnung;
      • eine Druckdifferenz (ΔP1) zwischen dem Boden des Tanks (5) und der Atmosphäre, die den Tank (9) im Innenraum (9) des Geräts umgibt;
      • eine Druckdifferenz (ΔP2), die zwischen zwei Punkten besteht, die sich in dem den Tank (5) umgebenden Raum innerhalb des Innenraums (9) befinden, durch den die Flüssigkeitshöhe stromabwärts des Behälters abgeleitet werden kann, um den Zustand des Fluids, gasförmig, zweiphasig oder unterkühlt, zu bestimmen, und die das Niveau der Flüssigkeitsüberflutung stromabwärts des Tanks angibt.

    - ein System zum Erfassen und Verarbeiten von Daten, das geeignet ist, folgende Auswertungen durchzuführen:

a. Bestimmen der Information über den Zustand des einströmenden Fluids: gasförmig, zweiphasig oder unterkühlt, anhand des Druckdifferenzdatensatzes $\Delta P2$;

b.- in Abhängigkeit von dieser Zustandsinformation das Bestimmen des Durchflusses unter Verwendung entweder der Druckdifferenz $\Delta P3$, wenn das Fluid 100 % gasförmig oder 100 % flüssig (unterkühlt) ist, oder der Druckdifferenz $\Delta P1$, die es ermöglicht, die Höhe der Flüssigkeit im Behälter und anschließend den Durchfluss des durch die Schlitze fließenden Fluids abzuleiten.

**Claims**

1. Flowmeter (1) for liquid/gas cryogenic two-phase fluids, comprising:

   - An inlet pipe (2) for the fluid of which the flow rate is to be measured, in the flowmeter, which pipe is provided with a calibrated orifice (8);
   - A vertical reservoir (5), which reservoir is surrounded by an apparatus (4), into which reservoir said pipe opens, the wall of the reservoir being provided with a plurality of slots for outflow of the fluid (6) forming a "spillway" system, from the reservoir (5) towards the interior space (9) inside the apparatus surrounding the reservoir (5);
   - Pressure sensors making it possible to measure the following pressure differences:

     • A pressure difference ($\Delta P3$) between upstream and downstream of the calibrated orifice
     • A pressure difference ($\Delta P1$) between the bottom of the reservoir (5) and the atmosphere surrounding the reservoir (9) within the interior space (9) within the apparatus;
     • A pressure difference ($\Delta P2$) existing between two points located in the space surrounding the reservoir (5) within said interior space (9), making it possible to deduce the height of liquid downstream of the reservoir, in order to determine the state of the fluid, gaseous, two-phase or subcooled, and giving the level of liquid flooding downstream of the reservoir.

   - a data acquisition and processing system, which is able to carry out the following evaluations:

     a. determination of the information on the state of the incoming fluid: gaseous, two-phase or subcooled, from the pressure difference datum $\Delta P2$;
     b. depending on this state information, the determination of said flow rate using either the pressure differential $\Delta P3$ when the fluid is 100% gaseous or 100% liquid (subcooled), or the pressure differential $\Delta P1$ that makes it possible to deduce the height of liquid in the reservoir and subsequently the flow rate of fluid passing through the slots.

[Fig. 1]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5679905 A

- FR 3013446